# EUROPÄISCHE PATENTSCHRIFT

(11) **EP 1 205 367 B1**
(45) Veröffentlichungstag und Bekanntmachung des Hinweises auf die Patenterteilung: **22.11.2006**
(21) Anmeldenummer: 01125120.4
(22) Anmeldetag: 23.10.2001
(51) Int. Cl.: B60R 25/10

(54) **Vorrichtung zur Diebstahlsicherung eines Kraftfahrzeugs**
Anti-theft device for a motor vehicle
Dispositif antivol pour véhicule automobile

(30) Priorität: 07.11.2000 DE 10055075
(43) Veröffentlichungstag der Anmeldung: 15.05.2002
(73) Patentinhaber: ROBERT BOSCH GMBH, 70442 Stuttgart (DE)
(72) Erfinder: Ries-Mueller, Klaus, 74906 Bad Rappenau (DE)

(56) Entgegenhaltungen:
- EP-A- 0 650 875
- DE-A- 19 642 607

## Beschreibung

### Stand der Technik

Die Erfindung geht aus von einer Vorrichtung zur Diebstahlsicherung eines Kraftfahrzeugs nach der Gattung des unabhängigen Anspruchs.

Aus der US 5,929,753 ist ein Sicherheitssystem bekannt, bei dem zur Sicherung eines Kraftfahrzeugs der Abstand des Bodens des Kraftfahrzeugs von dem Untergrund, auf dem sich das Kraftfahrzeug befindet, zur Diebstahlsicherung herangezogen wird. Vergrößert sich der Abstand beispielsweise durch Anheben des Kraftfahrzeugs, so wird auf eine diebstahlträchtige Situation geschlossen, die zu einer Alarmauslösung führt.

Aus der EP 0 650 875 A1, die dem Oberbegriff des unabhängigen Anspruchs entspricht, ist ein Vorrichtung zur Bewegungserkennung eines Kraftfahrzeugs bekannt, die einen zur Detektion des Füllstands eines Tanks eingesetzten Tankfüllstandssensor verwendet. Ein mit Hilfe eines Hochpassfilters gefiltertes Signal des Tankfüllstandssensors wird an einen Komparator übergeben, der ein Bewegung des Kraftfahrzeugs erkennt, wenn des gefilterte Signal einen vorgegebenen Schwellenwert übersteigt.

In der DE 196 42 607 A1 ist ein Verfahren zur Überwachung eines Kraftfahrzeug-Innenraums mittels eines UltraschallSensors gezeigt. Das Verfahrn kann entweder in einem kontinuierlichen Betrieb oder aus Gründen der Stromersparnis in einem Pulsbetrieb mit Messzeiten und Pausenzeiten durchgeführt werden. Weiterhin kann das Verfahren im Pulsbetrieb zur weiteren Stromersparnis in einem Zwei-Modus-Betrieb ("Normal-Modus", "Alarm-Modus") mit einer betriebsmodusabhängigen Wiederholrate der Messvorgänge durchgeführt werden.

Der Erfindung liegt die Aufgabe zu Grunde, ein ohnehin vorhandenes Sensorsystem für weitere Funktionen zu nutzen, den Stromverbrauch der Signalverarbeitung im abgestellten Zustand des Fahrzeugs zu reduzieren und eine verbesserte Genauigkeit einer Diebstahlerkennung zu erreichen. Diese Aufgabe wird gelöst durch die Merkmale des unabhängigen Anspruchs.

### Vorteile der Erfindung

Die erfindungsgemäße Vorrichtung zur Diebstahlsicherung eines Kraftfahrzeugs umfasst zumindest eine Signalverarbeitung, die zumindest ein Sensorsignal in einer ersten Betriebsart auswertet zur Erzeugung eines Aktivierungssignals einer Funktionseinheit, und die das Sensorsignal in einer zweiten Betriebsart, die sich von der ersten Betriebsart unterscheidet, auswertet zur Erzeugung eines Aktivierungssignals für einen Alarmsignalerzeuger. Es ist eine Betriebszustandserfassung vorgesehen zur Erkennung, ob sich das Kraftfahrzeug in einem deaktivierten Zustand befindet und/oder ob eine Alarmfunktion geschärft wurde. Die zweite Betriebsart ist aktiviert, wenn sich das Kraftfahrzeug im deaktivierten Zustand befindet und/oder die Alarmfunktion geschärft wurde; die erste Betriebsart ist aktiviert, wenn sich das Kraftfahrzeug im aktivierten Zustand befindet. Erfindungsgemäß ist vorgesehen, dass die Aktivierung der zweiten Betriebsart zyklisch erfolgt, und die Signalverarbeitung in der zweiten Betriebsart zumindest ein erstes Sensorsignal zu einem ersten Zeitpunkt in einem ersten Zyklus und ein zweites Sensorsignal zu einem zweiten Zeitpunkt in einem zweiten Zyklus erfasst zur Erzeugung eines Aktivierungssignals für den Alarmsignalerzeuger. Weichen das im ersten Zyklus erfasste Sensorsignal und das im zweiten Zyklus erfasste Sensorsignal unzulässig voneinander ab, kann auf eine Manipulation geschlossen werden, so dass der Alarmsignalerzeuger aktiviert wird. Somit verbrauchen die Signalverarbeitungen im abgestellten Zustand des Kraftfahrzeugs einerseits wenig Strom, andererseits ist eine hinreichende Genauigkeit einer Diebstahlerkennung erreicht. Darüber hinaus ist die Auswertung eines ohnehin für den Normalbetrieb des Kraftfahrzeugs erforderlichen Sensorsystems auch im deaktivierten Zustand des Kraftfahrzeugs zur Erkennung eines Diebstahlversuchs möglich. Durch eine geschickte Auswahl der Sensorik kann erreicht werden, dass auf Sensoren nur allein zum Zweck der Diebstahlerkennung verzichtet werden kann. Dadurch verbilligen sich die Herstellkosten einer Diebstahlwarnanlage. Außerdem können ohnehin vorhandene Sensoren zu einer redundanten Diebstahlerkennungsauswertung herangezogen werden, wodurch einerseits ein Diebstahl sicher erkannt wird, andererseits Fehlauslösungen einer Diebstahlwarnanlage vermieden werden.

Als Sensoren eignen sich insbesondere solche, die Abstands- und/oder Geschwindigkeitsinformationen auf Radar- oder Ultraschallbasis an ein automatisches Abstandsregelsystem oder an ein Parkhilfesteuergerät im Normalbetrieb (erste Betriebsart) weiterleiten. Außerdem eignen sich Sensoren zur Erfassung einer Höheninformation, beispielsweise der Stoßdämpfer, oder zur Erfassung der Neigungsänderung der Karosserie, deren Ausgangssignale einem Steuergerät zur Fahrwerksregelung als Eingangsgrößen dienen. Das Steuergerät zur Fahrwerksregelung steuert in Abhängigkeit von der erfassten Sensorinformation im aktivierten Betrieb des Kraftfahrzeugs Aktuatoren zur Beeinflussung des Fahrwerks an. Im deaktivierten Zustand des Kraftfahrzeugs werden die von der Sensorik bereitgestellten Informationen mit Blick auf einen möglichen Diebstahlversuch ausgewertet, wenn sich beispielsweise die Neigung der Karosserie über einen bestimmten Grenzwert hinaus ändert. Wiederum ist kein zusätzliches Sensorsystem notwendig. Auch ein Sensor zur Tankfüllstandsermittlung eignet sich zur Diebstahlerkennung. Ändert sich der Tankfüllstand im deaktivierten Zustand des Kraftfahrzeugs über einen Toleranzwert hinaus, so wird auf ein manipulierendes Ereignis geschlossen. Auch die Sensorik, die im Normalbetrieb ein Antiblockiersystem-Steuergerät bzw. ein elektronisches Stabilitätsprogramm-Steuergerät mit Informationen wie beispielsweise die Raddrehzahl, die Gierrate oder sonstige Beschleunigungsdaten übermittelt, können im deaktivierten Zustand zur Diebstahlerkennung ausgewertet werden.

Weitere zweckmäßige Weiterbildungen ergeben sich aus weiteren abhängigen Ansprüchen und aus der Beschreibung.

### Zeichnung

Ein Ausführungsbeispiel der erfindungsgemäßen Vorrichtung ist in der Zeichnung dargestellt und wird im Folgenden näher beschrieben.
Es zeigen
die Figur 1 ein Blockschaltbild einer allgemeinen Ausführung,
die Figur 2 ein Ausführungsbeispiel, welches auf einer Abstandsauswertung beruht sowie
die Figur 3 ein Flussdiagramm zur Sensorsignalauswertung.

### Beschreibung der Ausführungsbeispiele

Ein Sensorsignal 12 eines Sensors 10 ist einem Steuergerät 14 zugeführt. Das Steuergerät 14 ist in der Lage, das Sensorsignal 12 in einer ersten Betriebsart 16 oder in einer zweiten Betriebsart 18 auszuwerten. In dem Steuergerät 14 ist außerdem eine Aktivierungssteuerung 19 integriert, welche die Sensorsignalauswertung 12 in der zweiten Betriebsart 18 aktiviert. Das Steuergerät 14 tauscht Signale über ein Bussystem 20 mit einer Anzeigeneinheit 21, mit einer ersten Funktionseinheit 22, mit einer zweiten Funktionseinheit 24, mit einem Alarmsignalerzeuger 26 und einer Innenraumüberwachung 27 aus. Dem Steuergerät 14 ist außerdem ein Ausgangssignal einer Betriebszustandserfassung 28 zugeführt, welche aus einem Verriegelungskontaktschalter 30, einem Türkontaktschalter 32 und einem Zündstartschalter 34 besteht.

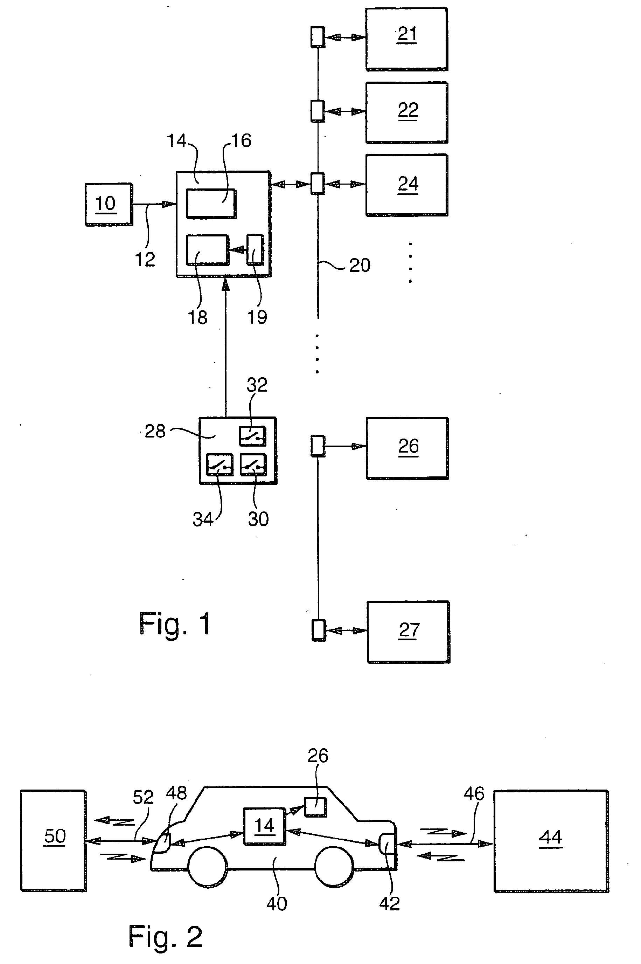

Bei dem Ausführungsbeispiel gemäß Figur 2 sind in einem Kraftfahrzeug 40 in der Frontpartie ein vorderer Entfernungssensor 42 und in der Heckpartie ein hinterer Entfernungssensor 48 angeordnet. Vorderer und hinterer Entfernungssensor 42, 48 tauschen Signale aus mit dem Steuergerät 14. Das Steuergerät 14 steuert wiederum den Alarmsignalerzeuger 26 an. Das Kraftfahrzeug 40 befindet sich zwischen einem ersten Hindernis 44 und einem zweiten Hindernis 50. Der vordere Entfernungssensor 42 ist mit einem Vorderabstand 46 von dem ersten Hindernis 44 entfernt, der hintere Entfernungssensor 48 mit einem Hinterabstand 42 von dem zweiten Hindernis 50.

In dem Steuergerät 14 ist ein Mikrocontroller angeordnet, der in der Lage ist, das von dem Sensor 10 bereitgestellte Sensorsignal 12 entweder in einer ersten Betriebsart 16 oder in einer zweiten Betriebsart 18 auszuwerten. Die erste Betriebsart 16 ist im Normalbetrieb des Kraftfahrzeugs 40 aktiviert. Als Normalbetrieb wird verstanden, wenn das Kraftfahrzeug 40 eingeschaltet ist (Zündung an) und/oder gefahren wird. In dieser ersten Betriebsart 16 erzeugt das Steuergerät 14 nach bestimmten Steuer- und Regelalgorithmen in Abhängigkeit von dem Sensorsignal 12 Ansteuersignale für die Anzeigeneinheit 21 und/oder die Funktionseinheiten 22, 24.

Das Steuergerät 14 kann nun auch in einer zweiten Betriebsart 18 das Sensorsignal 12 auswerten. Die zweite Betriebsart 18 ist aktiviert, wenn das Kraftfahrzeug 40 deaktiviert und/oder die Alarmanlagenfunktion geschärft wurde. In der zweiten Betriebsart 18 wird zumindest ein erstes Sensorsignal 12, zum ersten Zeitpunkt t1 erfasst, mit einem zweiten Sensorsignal 12, zu einem zweiten Zeitpunkt t2 erfasst, verglichen. Weichen die beiden zu den Zeitpunkten t1, t2 erfassten Sensorsignale voneinander um einen vorgebbaren Grenzwert ab, so wird auf eine Manipulation des Kraftfahrzeugs 40 geschlossen. In diesem Fall sendet das Steuergerät 14 über das Bussystem 20 ein Aktivierungssignal an den Alarmsignalerzeuger 26, um die Umgebung oder den Benutzer auf einen Diebstahlversuch aufmerksam zu machen.

Bei dem Alarmsignalerzeuger 26 kann es sich beispielsweise um eine Sirene oder eine Beleuchtungseinrichtung, vorzugsweise in einer bestimmten Blinkfrequenz angesteuert, die Aufmerksamkeit erregt, handeln.

Anhand des Ausgangssignals der Betriebszustandserfassung 28 entscheidet der Mikrocontroller des Steuergeräts 14, welche der beiden Betriebsarten 16, 18 zu aktivieren ist. Signalisiert beispielsweise der Verriegelungskontaktschalter 30, dass das Kraftfahrzeug 40 bereits ordnungsgemäß verriegelt wurde, so wird auf ein deaktiviertes Kraftfahrzeug 40 geschlossen und die zweite Betriebsart 18 anstelle der ersten Betriebsart 16 zur Sensorsignalauswertung aktiviert. Die zweite Betriebsart 18 könnte auch in Verbindung mit dem Türkontaktschalter 32 vorgewählt werden. Entweder bei einmaligem Öffnen der Tür und/oder bei anschließendem Schließen folgt die Sensorsignalauswertung für Diebstahlerkennungszwecke. Hierfür eignet sich auch eine Abfrage des Zündstartschalters 34. So wird die zweite Betriebsart 18 vorzugsweise mit "Zündung aus" getriggert. Als weitere Möglichkeit besteht die Abfrage eines Signals, ob sich ein Zündschlüssel im Zündschloss befindet. Wird dieser entfernt, so ändert ein die Schlüsselstellung erfassender Kontaktschalter seinen Zustand, was im Sinne eines Deaktivierungswunsches des Kraftfahrzeugs 40 ausgelegt wird. Befindet sich kein Schlüssel im Schloss, erfolgt die Sensorsignalauswertung in der zweiten Betriebsart. Alternativ könnte die zweite Betriebsart 18 aktiviert werden, wenn die Alarmanlagenfunktioin bewusst vom Benutzer geschärft würde, beispielsweise durch eine bestimmte Bediensequenz einer nicht dargestellten Fernbedienung.

Liegt seitens der Betriebszustandserfassung 28 kein Signal vor, welches auf einen deaktivierten Zustand des Kraftfahrzeugs 40 hindeutet, so ist die erste Betriebsart 16 anstelle der zweiten Betriebsart 18 aktiviert. Damit der Mikrocontroller des Steuergeräts 14 beim deaktivierten Zustand des Kraftfahrzeugs 40 nicht ständig Strom verbraucht, kann er grundsätzlich im Ruhebetrieb verweilen. Außerdem ist eine Aktivierungssteuerung 19 vorgesehen, die den Mikrocontroller aufweckt, damit dieser in der zweiten Betriebsart 18 eine Sensorsignalauswertung zur. Diebstahlerkennung vornimmt. Dies geschieht zyklisch. Wird der Mikrocontroller aktiviert, erfasst er zum Zeitpunkt t2 das Sensorsignal 12.
Anschließend vergleicht er das zum Zeitpunkt t2 erfasste Sensorsignal 12 mit einem zu einem vorherigen Zeitpunkt t1 ermittelten Sensorsignal 12 und vergleicht es mit dem aktuell erfassten Sensorsignal 12 zum Zeitpunkt t2. Zum Zweck der Diebstahlerkennung wird die Differenz der beiden Signale gebildet. Diese Differenz wird mit einem vorgebbaren Grenzwert verglichen. Liegt der Betrag der Differenz über dem Betrag des Grenzwerts, so wird auf eine unzulässige Änderung der Umgebungsbedingungen geschlossen, die einen Diebstahlversuch bewirkt haben könnte. Der Alarmsignalerzeuger 26 wird aktiviert.

Zusätzlich zu einer zyklischen Aktivierung könnte auch vorgesehen sein, zur Plausibilitätsüberwachung eines von der Innenraumüberwachung 27 detektierten Einbruchversuchs das Sensorsignal 12 redundant auszuwerten. Liegt ein Signal der Innenraumüberwachung 27 vor, welches besagt, dass ein Einbruchsversuch unternommen worden sein könnte, erfolgt die bereits beschriebene Signalauswertung in der zweiten Betriebsart 18. Kommt man im Rahmen dieser Überprüfung auch zu dem Ergebnis, dass ein Diebstahlversuch unternommen worden sein könnte, so wird der Alarmsignalerzeuger 26 aktiviert. Deutet diese Auswertung jedoch nicht auf einen solchen Einbruchversuch hin, so unterbleibt eine Aktivierung des Alarmsignalerzeugers 26.

Dieses allgemeine Prinzip eignet sich nun für eine Reihe von Sensorsystemen zur Erzeugung von Ansteuersignale für unterschiedlichste Funktioneinheiten 22, 24. Als Sensor 10 ist beispielsweise ein Höheninformationssensor eines Stoßdämpfers vorgesehen. In der ersten Betriebsart 16 wird dieses entsprechende Sensorsignal 12 in dem Steuergerät 14 für die Fahrwerksregelung ausgewertet. Hierzu können noch weitere Parameter herangezogen werden. In Abhängigkeit von dem Sensorsignal 12 (Höheninformation der Stoßdämpfer) können entsprechende Aktuatoren als Beispiele für mögliche Funktionseinheiten 22, 24 über das Bussystem 20 angesteuert werden, um eine bestimmte, von dem Steuergerät 14 ermittelte Soll-Vorgabe der Stoßdämpferhöhe einzustellen. Wird das Kraftfahrzeug 40 abgestellt und erkennt die Betriebszustandserfassung 28 ein deaktiviertes Kraftfahrzeug 40, so wird in der zweiten Betriebsart 18 diese Höheninformation vom Stoßdämpfer ausgewertet. Beispielsweise mit dem Abstellen des Kraftfahrzeugs 40 wird diese Höheninformation zum Zeitpunkt t1 eingespeichert. Anschließend wird entweder ständig oder zyklisch diese Höheninformation der Stoßdämpfer weiterhin abgefragt. Das so ermittelte neue Sensorsignal 12 zum Zeitpunkt t2 wird mit dem Sensorsignal 12 zum Zeitpunkt t1 verglichen. Bei einer großen Abweichung wird der Alarmsignalerzeuger 26 aktiviert. Diese Höhenänderung der Stoßdämpfer könnte durch manipulierendes Anheben des Kraftfahrzeugs 40 hervorgerufen worden sein.

Als weiterer möglicher Sensor 10 eignet sich beispielsweise ein Tankfüllstandssensor. Dessen Sensorsignal 12 wird in einer ersten Betriebsart 16 durch das Steuergerät 14 ausgewertet. Im einfachsten Fall könnte es sich um eine Tankanzeige handeln, die bei Unterschreiten eines kritischen Tankfüllstandes ein Warnsignal erzeugt. Dieses Warnsignal gelangt über das Bussystem 20 an die Anzeigeneinheit 21 und wird dort in eine entsprechende Warnanzeige umgesetzt. Mit dem Deaktivieren des Kraftfahrzeugs 40 oder gegebenenfalls später wird das Sensorsignal 12 zum Zeitpunkt t1 abgespeichert. Überschreitet ein zu dem späteren Zeitpunkt t2 ermitteltes Sensorsignal 12 das zum Zeitpunkt t1 erfasste Sensorsignal 12, folgt wiederum eine Aktivierung des Alarmsignalerzeugers 26. Eine Änderung des Füllstands könnte nämlich beispielsweise durch einseitiges Anheben des Kraftfahrzeugs 40 hervorgerufen worden sein, wie es beispielsweise beim Verladen auf ein Nutzfahrzeug auftreten könnte.

Als weiteres Sensorsystem 10 bieten sich beispielsweise Raddrehzahlsensoren an. In der ersten Betriebsart 16 werden sie in dem Steuergerät 14 ausgewertet, um beispielsweise ein Blockieren der Räder oder ein Schleudern des Kraftfahrzeugs 40 zu verhindern. Somit ist in dem Steuergerät 14 die Antiblockierfunktion oder die elektronische Stabilitätsprogrammfunktion der ersten Betriebsart 16 realisiert. Als weitere Sensorsysteme, die ein ABS-ESP-Steuergerät 14 auswertet, eignen sich Giersensoren bzw. sonstige Beschleunigungssensoren oder Neigungssensoren. Ergeben sich im Rahmen der Auswertung in der zweiten Betriebsart 18 signifikante Abweichungen, so kann dies wieder zu einer Aktivierung des Alarmsignalerzeugers 26 führen.

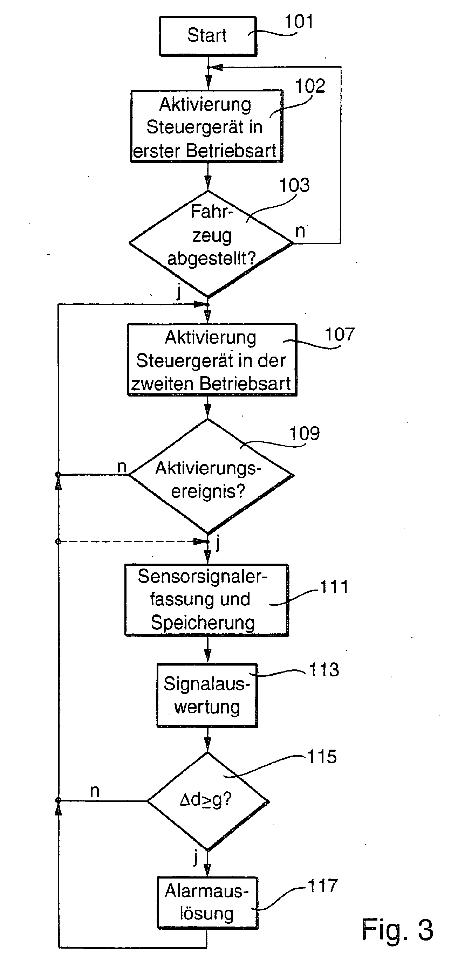

Ein weiteres Sensorsystem wird in Verbindung mit den Figuren 2 und 3 näher erläutert. Dabei handelt es sich um Abstands- und/oder Geschwindigkeitssensoren 42, 48, die den Abstand und/oder die Geschwindigkeit gegenüber einem vorderen Hindernis 44 und/oder einem hinteren Hindernis 50 erfassen.

Hierzu sind vordere und hintere Entfernungssensoren 42, 48 vorgesehen, die front- und heckseitig am Kraftfahrzeug 40 angeordnet sind. Die Sensoren 10 arbeiten beispielsweise auf Radar- oder Ultraschallbasis. Anhand der Laufzeit der reflektierten Welle kann auf die Entfernung und/oder die Geschwindigkeit des Hindernisses 44, 50 geschlossen werden.

Die Betriebsweise der in Figur 2 dargestellten Vorrichtung wird nun in Verbindung mit dem Flussdiagramm nach Figur 3 näher beschrieben. Der Benutzer startet das Kraftfahrzeug 40, Schritt 101. Die Betriebszustandserfassung 28 erkennt anhand des Signals "Zündung ein", dass das Kraftfahrzeug 40 ordnungsgemäß aktiviert wurde. Das Steuergerät 14 nimmt eine Sensorsignalerfassung in der ersten Betriebsart 16 vor. Hier wird beispielsweise eine adaptive Geschwindigkeitsregelung des Kraftfahrzeugs 40 durchgeführt, damit ein bestimmter Abstand zu einem vorausfahrenden Kraftfahrzeug eingehalten werden kann. So wertet das Steuergerät 14 ständig die Radar- oder Ultraschallsignale 12 aus, um den Abstand und die Relativgeschwindigkeit zum vorausfahrenden Kraftfahrzeug zu ermitteln. In Verbindung mit der eigenen Ist-Geschwindigkeit wird nun ein Soll-Wert an das Motorsteuergerät als Beispiel für eine Funktionseinheit 22, 24 vorgegeben, damit der gewünschte Abstand zu dem vorausfahrenden Kraftfahrzeug eingehalten werden kann. Die entsprechenden Regelalgorithmen erfolgen in Schritt 102.

Alternativ oder zusätzlich kann die Abstandssensorik auch zu Zwecken der Einparkhilfe im Rahmen der ersten Betriebsart 16 herangezogen werden. Es wird beispielsweise bei niedrigen Geschwindigkeiten eine ständige Abstandsüberwachung zu einem vorderen und einem hinteren Hindernis 44, 50 durchgeführt. Erreichen der Vorderabstand 46 und/oder der Hinterabstand 50 einen kritischen Grenzwert, so erzeugt das Einparkhilfesteuergerät 14 ein Warnsignal, welches über das Bussystem 20 an die Anzeigeneinheit 21 gelangt. Diese erzeugt beispielsweise ein blinkendes Warnsignal. Auch eine akustische Warnung könnte vorgesehen werden. Dies erfolgt bei aktiviertem Kraftfahrzeug 40 in der ersten Betriebsart 16 gemäß Schritt 102.

Hat der Benutzer nun sein Kraftfahrzeug 40 eingeparkt, so wird anhand des Zündstartschalters 34, des Verriegelungskontaktschalters 30 oder des Türkontaktschalters 32 erkannt, dass das Kraftfahrzeug 40 abgestellt und deaktiviert wurde. Die entsprechende Abfrage wird in Schritt 103 vorgenommen. Alternativ könnte die Aktivierung der zweiten Betriebsart 18 in Verbindung mit dem Schärfen der Alarmfunktion vorgenommen werden, beispielsweise, wenn der Benutzer die Fernbedienung in einer bestimmten Weise betätigt.Dieses Deaktivierungsereignis kann gleichzeitig hierauf verwendet werden, die Abstände 46, 52 zum Zeitpunkt t1 zu erfassen und abzuspeichern.

Die Sensorsignalauswertung erfolgt nun in der zweiten Betriebsart 18, Schritt 107. In Schritt 109 wird zyklisch abgefragt, ob ein Aktivierungsereignis aufgetreten ist. Ein solches Aktivierungsereignis könnte beispielsweise ein vorgegebener Zeitablauf sein zur zyklischen Sensorsignalerfassung. Als weiteres Aktivierungsereignis könnten die Signale einer optional vorgesehenen Innenraumüberwachung herangezogen werden. Die weiteren Schritte dienen dann einer Plausibilitätsüberprüfung der Innenraumüberwachung.

Ist nun ein Aktivierungsereignis aufgetreten, so wird das zu diesem Zeitpunkt t2 anstehende Sensorsignal 12 erfasst und gegebenenfalls abgespeichert, Schritt 111. Für die darauf folgende Signalauswertung, Schritt 113, stehen somit zwei Vorderabstände 46 zu den Zeitpunkten t1 und t2 sowie zwei Hinterabstände 52 zu den Zeitpunkten t1 und t2 zur Verfügung. Sind keine Abstandsänderungen zu den Zeitpunkten t1 und t2 zu verzeichnen, so wird ohne Ansteuerung des Alarmsignalerzeugers 26 die Diebstahlerkennung im Schritt 107 oder eventuell mit Schritt 111 fortgeführt. Bei einer Abstandsänderung jedoch, welche einen vorgebbaren Grenzwert übersteigt, könnte auf einen Diebstahl geschlossen werden. Bei der weiteren Plausibilitätsüberprüfung wird überprüft, ob sich der Vorderabstand und der Hinterabstand 52 gegensinnig ändern, d. h. ob beispielsweise der Vorderabstand 46 kleiner wird, während hingegen der Hinterabstand 52 zunimmt. Es wird vermutet, dass sich dann das Kraftfahrzeug 40 bewegt und nicht das Hindernis. In diesem Fall wird ein Diebstahl vermutet, wobei der Alarmsignalerzeuger 26 im Schritt 117 aktiviert wird.

## Patentansprüche

1. Vorrichtung zur Diebstahlsicherung eines Kraftfahrzeugs mit zumindest einer Signalverarbeitung (14), die zumindest ein Sensorsignal (12) eines Sensors (10) in einer ersten Betriebsart (16) auswertet zur Erzeugung eines Ansteuersignals für eine Funktionseinheit (21, 22, 24), und die das Sensorsignal (12) in einer zweiten Betriebsart (18), die sich von der ersten Betriebsart (16) unterscheidet, auswertet zur Erzeugung eines Ansteuersignals für einen Alarmsignalerzeuger (26), mit einer Betriebszustandserfassung (28) zur Erkennung, ob sich das Kraftfahrzeug (40) in einem deaktivierten Zustand befindet und/oder ob eine Alarmfunktion geschärft wurde, wobei die zweite Betriebsart (18) aktiviert ist, wenn sich das Kraftfahrzeug (40) im deaktivierten Zustand befindet und/oder die Alarmfunktion geschärft wurde und die erste Betriebsart (16) aktiviert ist, wenn sich das Kraftfahrzeug (40) im aktivierten Zustand befindet, **dadurch gekennzeichnet, dass** die Aktivierung der zweiten Betriebsart (18) zyklisch erfolgt, und die Signalverarbeitung (14) in der zweiten Betriebsart (18) zumindest ein erstes Sensorsignal (12) zu einem ersten Zeitpunkt (t1)in einem ersten Zyklus und ein zweites Sensorsignal (12) zu einem zweiten Zeitpunkt (t2) in einem zweiten Zyklus erfasst zur Erzeugung eines Aktivierungssignals für den Alarmsignalerzeuger (26), falls das zum ersten Zeitpunkt (t1) erfasste erste Sensorsignal (12) und das zum zweiten Zeitpunkt (t2) erfasste zweite Sensorsignal (12) voneinander um einen vorgebbaren Grenzwert abweichen.

2. Vorrichtung nach Anspruch 1, **dadurch gekennzeichnet, dass** das Aktivierungssignal erzeugt ist, wenn das Sensorsignal (12) einen vorgebbaren Grenzwert überschreitet.

3. Vorrichtung nach einem der vorhergehenden Ansprüche, **dadurch gekennzeichnet, dass** die Auswertung des Sensorsignals (12) in der zweiten Betriebsart (18) durch ein Aktivierungsereignis gestartet wird.

4. Vorrichtung nach einem der vorhergehenden Ansprüche, **dadurch gekennzeichnet, dass** als Sensor (10) ein Radarsensor, ein Ultraschallsensor, ein Drehzahlsensor, ein Gierratensensor, ein Beschleunigungssensor, ein Reifendrucksensor, ein Wegsensor innerhalb der Stossdämpfer, ein Kraftsensor zur Fahrzeuggewichtsbestimmung und/oder ein Tankfüllstandssensor verwendet ist.

5. Vorrichtung nach einem der vorhergehenden Ansprüche, **dadurch gekennzeichnet, dass** als Betriebszustandserfassung das Signal zumindest eines Türkontaktschalters (32) und/oder eines Verriegelungskontaktschalters (30) und/oder eines Zündstartschalters (34) ausgewertet und/oder eines Bedienelements zum Aktivieren einer Alarmanlagenfunktion ist.

6. Vorrichtung nach einem der vorhergehenden Ansprüche, **dadurch gekennzeichnet, dass** zumindest ein Sensor (10) zur Umfelderfassung vorgesehen ist, wobei der Alarmsignalerzeuger (46) aktiviert ist, wenn sich Vorder- und Hinterabstand (46, 52) gegengleich ändern.

## Claims

1. Anti-theft device for a motor vehicle having at least one signal processing means (14) which evaluates at least one sensor signal (12) of a sensor (10) in a first operating mode (16) in order to generate a drive signal for a functional unit (21, 22, 24), and which evaluates the sensor signal (12) in a second operating mode (18) which differs from the first operating mode (16), in order to generate a drive signal for an alarm signal generator (26), having an operating-state-sensing means (28) for detecting whether the motor vehicle (40) is in a deactivated state and/or whether an alarm function has been primed, the second operating mode (18) being activated if the motor vehicle (40) is in the deactivated state and/or the alarm function has been primed, and the first operating mode (16) is activated if the motor vehicle (40) is in the activated state, **characterized in that** the second operating mode (18) is activated cyclically and the signal processing means (14) senses at least a first sensor signal (12) at a first time (t1) in a first cycle in the second operating mode (18), and a second signal (12) at a second time (t2) in a second cycle, in order to generate an activation signal for the alarm signal generator (26) if the first sensor signal (12) which is sensed at the first time (t1) and the second sensor signal (12) which is sensed at the second time (t2) deviate from one another by a predefinable limiting value.

2. Device according to Claim 1, **characterized in that** the activation signal is generated if the sensor signal (12) exceeds a predefinable limiting value.

3. Device according to one of the preceding claims, **characterized in that** the evaluation of the sensor signal (12) is started in the second operating mode (18) by an activation event.

4. Device according to one of the preceding claims, **characterized in that** the sensor used (10) is a radar sensor, an ultrasonic sensor, a rotational speed sensor, a yaw rate sensor, an acceleration sensor, a tyre pressure sensor, a displacement sensor within the bumper, a force sensor for determining the weight of the vehicle and/or a fuel tank filling level sensor.

5. Device according to one of the preceding claims, **characterized in that** the signal of at least one door contact switch (32) and/or one block contact switch (30) and/or one ignition starter switch (34) is evaluated as the operating-state-sensing means and/or is of an operator control element for activating an alarm system function.

6. Device according to one of the preceding claims, **characterized in that** at least one sensor (10) is provided for sensing the surroundings, the alarm signal generator (46) being activated if the distance to the front and distance to the rear (46, 52) change in a diametrically opposed fashion.

## Revendications

1. Dispositif antivol pour véhicule automobile doté d'au moins un traitement des signaux (14) qui évalue au moins un signal de capteur (12) d'un capteur (10) dans un premier mode de fonctionnement (16) afin de générer un signal de commande d'une unité fonctionnelle (21, 22, 24), qui évalue le signal de capteur (12) dans un deuxième mode de fonctionnement (18) diffèrent du premier mode de fonctionnement (16) pour générer un signal de commande pour un générateur de signal d'alarme (26), doté d'un dispositif de détection de l'état de fonctionnement (28) pour déterminer si le véhicule (40) se trouve dans un état désactivé et/ou si une fonction d'alarme a été enclenchée, le deuxième mode de fonctionnement (18) étant activé lorsque le véhicule (40) se trouve à l'état désactivé et/ou lorsque la fonction d'alarme a été enclenchée et le premier mode de fonctionnement (16) étant activé lorsque le véhicule (40) se trouve à l'état activé,
**caractérisé en ce que**
l'activation du deuxième mode de fonctionnement (18) est cyclique et le traitement des signaux (14) dans le deuxième mode de fonctionnement (18) détecte au moins un premier signal de capteur (12) à un premier moment (t1) dans un premier cycle et un deuxième signal de capteur (12) à un deuxième moment (t2) dans un deuxième cycle pour générer un signal d'activation du générateur de signal d'alarme (26), si le premier signal de capteur (12) détecté au premier moment (t1) et le deuxième signal de capteur (12) détecté au deuxième moment (t2) s'écartent l'un de l'autre d'une valeur limite donnée.

2. Dispositif selon la revendication 1,
**caractérisé en ce que**
le signal d'activation est généré lorsque le signal de capteur (12) dépasse une valeur limite donnée.

3. Dispositif selon l'une des revendications précédentes,
**caractérisé en ce que**
l'évaluation du signal de capteur (12) dans le deuxième mode de réalisation (18) est lancée par un événement d'activation.

4. Dispositif selon l'une des revendications précédentes,
**caractérisé en ce qu'**
comme capteur (10) on utilise un radar, un capteur à ultrasons, un capteur de vitesse de rotation, un capteur de vitesse de lacet, un capteur d'accélération, un capteur de pression de pneu, un capteur de trajectoire dans les amortisseurs, un capteur de force pour déterminer le poids du véhicule et/ou un capteur de niveau de remplissage du réservoir.

5. Dispositif selon l'une des revendications précédentes,
**caractérisé en ce que**
comme dispositif de détection de l'état de fonctionnement on utilise le signal d'au moins un contacteur de feuillure de porte (32) et/ou d'un contacteur de verrouillage (30) et/ou d'un contacteur d'allumage (34) et/ou d'un élément de commande pour l'activation d'une fonction du dispositif d'alarme.

6. Dispositif selon l'une quelconque des revendications précédentes,
**caractérisé par**
au moins un capteur (10) de détection de l'environnement, le générateur du signal d'alarme (46) étant activé lorsque les écarts avant et arrière (46, 52) se modifient de manière diamétralement opposée.
